(19) Europäisches Patentamt
European Patent Office
Office européen des brevets

(11) EP 4 325 621 A1

(12) # EUROPEAN PATENT APPLICATION
published in accordance with Art. 153(4) EPC

(43) Date of publication:
**21.02.2024 Bulletin 2024/08**

(21) Application number: **22842504.7**

(22) Date of filing: **15.07.2022**

(51) International Patent Classification (IPC):
***H01M 10/0567*** *(2010.01)* ***H01M 10/052*** *(2010.01)*
***H01M 4/525*** *(2010.01)*

(52) Cooperative Patent Classification (CPC):
**H01M 4/525; H01M 10/052; H01M 10/0567;**
Y02E 60/10

(86) International application number:
**PCT/KR2022/010350**

(87) International publication number:
**WO 2023/287242 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2021 KR 20210093499**

(71) Applicant: **LG Energy Solution, Ltd.**
**Seoul 07335 (KR)**

(72) Inventors:
- **OH, Jeong Woo**
  **Daejeon 34122 (KR)**
- **PARK, Sung Guk**
  **Daejeon 34122 (KR)**
- **LEE, Chul Haeng**
  **Daejeon 34122 (KR)**

(74) Representative: **Hoffmann Eitle**
**Patent- und Rechtsanwälte PartmbB**
**Arabellastraße 30**
**81925 München (DE)**

(54) **NONAQUEOUS ELECTROLYTE SOLUTION AND LITHIUM SECONDARY BATTERY COMPRISING SAME**

(57) The present invention relates to a non-aqueous electrolyte solution including a lithium salt; an organic solvent; and a compound represented by a specific formula, wherein the present invention provides the non-aqueous electrolyte solution capable of improving lithium ion transport properties, electrochemical stability, and battery durability.

EP 4 325 621 A1

## Description

### TECHNICAL FIELD

[Cross-reference to Related Applications]

This application claims priority from Korean Patent Application No. 10-2021-0093499, filed on July 16, 2021, the disclosure of which is incorporated by reference herein.

[Technical Field]

The present invention relates to a non-aqueous electrolyte solution, and a lithium secondary battery including the same.

### BACKGROUND ART

There is a need to develop battery technology for efficiently storing and utilizing electrical energy as personal IT devices and computer networks are developed with the recent development of information society and the accompanying dependency of society as a whole on the electrical energy is increased.

Particularly, studies of electricity storage devices, such as electric double-layer capacitors and lithium ion batteries, have been extensively conducted as an interest in solving environmental problems and realizing a sustainable circular society emerges. Among them, a lithium secondary battery is in the spotlight as a battery system with the highest theoretical energy density among battery technologies.

The lithium secondary battery is largely composed of a positive electrode formed of a transition metal oxide containing lithium, a negative electrode capable of storing lithium, an electrolyte solution that becomes a medium for transferring lithium ions, and a separator, and, among them, a significant amount of research on the electrolyte solution has been conducted while the electrolyte solution is known as a component that greatly affects stability or safety of the battery.

In this regard, a non-aqueous electrolyte solution including a lithium salt and an organic solvent is generally used as the electrolyte solution of the lithium secondary battery, and a carbonate-based organic solvent is used as the organic solvent. In this case, when the carbonate-based organic solvent is exposed to a high temperature or high voltage, since it is easily decomposed at an electrode (positive electrode or negative electrode) interface, it may not perform a function of the electrolyte solution and a large amount of a gas by-product, such as $CO_2$, is released as a decomposition by-product, and thus, it becomes a cause of increasing a volume of the lithium secondary battery and reducing battery durability. Particularly, in a case in which a lithium transition metal composite oxide containing a large amount of nickel (Ni) is used as a positive electrode active material, or in a case in which a lithium secondary battery requiring a high voltage is used, this problem is further intensified.

Thus, there is an urgent need to develop a non-aqueous electrolyte solution for a lithium secondary battery which may improve lithium ion transport properties, electrochemical stability, or battery durability.

US Patent Publication No. 2018-0316061 discloses an amide-based electrolyte solution battery, but did not suggest an alternative to the above-described problem.

[Prior Art Document]

[Patent Document]

US Patent Publication No. 2018-0316061

### DISCLOSURE OF THE INVENTION

### TECHNICAL PROBLEM

An aspect of the present invention provides a non-aqueous electrolyte solution which may improve lithium ion transport properties, electrochemical stability, and battery durability.

Another aspect of the present invention provides a lithium secondary battery including the above-described non-aqueous electrolyte solution.

## TECHNICAL SOLUTION

According to an aspect of the present invention, there is provided a non-aqueous electrolyte solution including: a lithium salt; an organic solvent; and a compound represented by Formula 1.

[Formula 1]

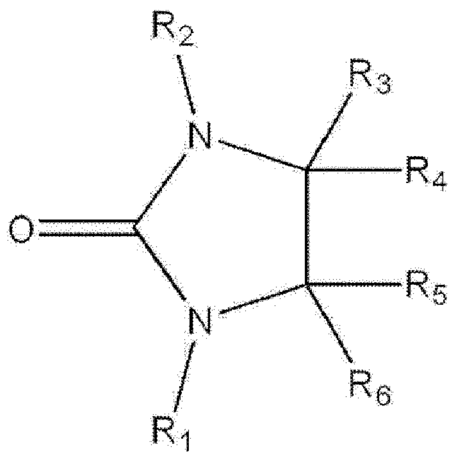

In Formula 1, $R_1$ and $R_2$ are each independently a substituent selected from an alkyl group having 1 to 10 carbon atoms and an aryl group having 6 to 14 carbon atoms, $R_3$, $R_4$, $R_5$, and $R_6$ are each independently a substituent selected from the group consisting of hydrogen, an alkyl group having 1 to 10 carbon atoms, an alkoxy group having 1 to 10 carbon atoms, and an aryl group having 6 to 14 carbon atoms, and, in one or more substituents of $R_1$, $R_2$, $R_3$, $R_4$, $R_5$, and $R_6$, at least one hydrogen is substituted with a halogen element which is selected from the group consisting of fluorine (F), bromine (Br), chlorine (Cl), and iodine (I).

According to another aspect of the present invention, there is provided a lithium secondary battery including: a negative electrode; a positive electrode facing the negative electrode; a separator disposed between the negative electrode and the positive electrode; and the above-described non-aqueous electrolyte solution.

## ADVANTAGEOUS EFFECTS

A non-aqueous electrolyte solution according to the present invention is characterized in that it may improve lithium ion transport properties, electrochemical stability, and battery durability by including a lithium salt; an organic solvent; and a compound represented by a specific formula. Specifically, since the compound included in the non-aqueous electrolyte solution according to the present invention has a higher melting point than a conventional carbonate-based compound, has stable electrochemical properties, and does not generate a gas by-product, such as $CO_2$, even if it is decomposed, it may prevent an increase in volume of a battery and a decrease in battery durability during operation of the lithium secondary battery. Also, the compound included in the non-aqueous electrolyte solution according to the present invention may improve lithium ion transport performance because it may form a coordination structure with lithium ions by including a halogen element, such as fluorine (F), bromine (Br), chlorine (Cl), and iodine (I), in the compound, it may increase an energy level of HOMO (Highest Occupied Molecular Orbital) of the compound to significantly improve oxidation stability, and a solid electrolyte interface (SEI) layer of a negative electrode may be stably formed because formation of a by-product by a decomposition reactions is prevented and reductive decomposition occurs easily.

Thus, the lithium secondary battery including the above-described non-aqueous electrolyte solution minimizes the increase in the volume of the battery during the operation of the battery, has excellent life characteristics, and may have low resistance and improved output characteristics due to excellent lithium ion transport properties.

## MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries. It will be further understood that the words or

terms should be interpreted as having a meaning that is consistent with their meaning in the context of the relevant art and the technical idea of the invention, based on the principle that an inventor may properly define the meaning of the words or terms to best explain the invention.

Also, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression average particle diameter ($D_{50}$) may be defined as a particle diameter at a cumulative volume of 50% in a particle size distribution curve. The average particle diameter ($D_{50}$), for example, may be measured by using a laser diffraction method. The laser diffraction method may generally measure a particle diameter ranging from submicrons to a few mm and may obtain highly repeatable and high-resolution results.

Hereinafter, a non-aqueous electrolyte solution of the present invention and a lithium secondary battery including the same will be described in detail.

## Non-aqueous Electrolyte Solution

The present invention provides a non-aqueous electrolyte solution. Specifically, the non-aqueous electrolyte solution may be a non-aqueous electrolyte solution for a lithium secondary battery.

Specifically, the non-aqueous electrolyte solution according to the present invention includes a lithium salt; an organic solvent; and a compound represented by Formula 1 below.

[Formula 1]

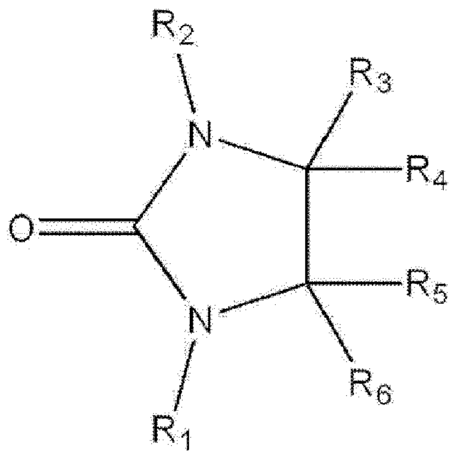

In Formula 1, $R_1$ and $R_2$ are each independently a substituent selected from an alkyl group having 1 to 10 carbon atoms and an aryl group having 6 to 14 carbon atoms, $R_3$, $R_4$, $R_5$, and $R_6$ are each independently a substituent selected from the group consisting of hydrogen, an alkyl group having 1 to 10 carbon atoms, an alkoxy group having 1 to 10 carbon atoms, and an aryl group having 6 to 14 carbon atoms, and, in one or more substituents of $R_1$, $R_2$, $R_3$, $R_4$, $R_5$, and $R_6$, at least one hydrogen is substituted with a halogen element which is selected from the group consisting of fluorine (F), bromine (Br), chlorine (Cl), and iodine (I).

The non-aqueous electrolyte solution according to the present invention is characterized in that it may improve lithium ion transport properties, electrochemical stability, and battery durability by including the lithium salt; the organic solvent; and the compound represented by Formula 1. Specifically, since the compound represented by Formula 1 included in the non-aqueous electrolyte solution according to the present invention has a higher melting point than a conventional carbonate-based compound, has stable electrochemical properties, and does not generate a gas by-product, such as $CO_2$, even if it is decomposed, it may prevent an increase in volume of the battery and a decrease in battery durability during operation of the lithium secondary battery. Also, the compound included in the non-aqueous electrolyte solution according to the present invention may improve lithium ion transport performance because it may form a coordination structure with lithium ions by including the halogen element, such as F, Br, Cl, and I, in the compound, it may increase an energy level of HOMO (Highest Occupied Molecular Orbital) of the compound to significantly improve oxidation stability, and a solid electrolyte interface (SEI) layer of a negative electrode may be stably formed because formation of a by-product by a decomposition reaction is prevented and reductive decomposition occurs easily.

Thus, the lithium secondary battery including the above-described non-aqueous electrolyte solution minimizes

the increase in the volume of the battery during the operation of the battery, has excellent life characteristics, and may have low resistance and improved output characteristics due to excellent lithium ion transport properties.

**(1) Lithium Salt**

The non-aqueous electrolyte solution of the present invention includes a lithium salt. The lithium salt is used as an electrolyte salt in the lithium secondary battery, wherein it is used as a medium for transferring lithium ions.

Typically, the lithium salt may include at least one selected from the group consisting of $LiPF_6$, $LiBF_4$, $LiSbF_6$, $LiAsF_6$, $LiClO_4$, $LiN(C_2F_5SO_2)_2$, $LiN(CF_3SO_2)_2$, $CF_3SO_3Li$, $LiC(CF_3SO_2)_3$, $LiC_4BO_3$, LiTFSI, LiFSI, and $LiClO_4$, and the lithium salt may specifically include $LiPF_6$ in consideration of ion transport properties and electrochemical stability of an electrolyte, but is not limited thereto. The lithium salt may be used alone or as a mixture of two or more thereof, if necessary.

The lithium salt may be included in a concentration of 0.5 M to 5 M in the non-aqueous electrolyte solution, and may preferably be included in a concentration of 0.5 M to 4 M. In a case in which the concentration of the lithium salt is within the above range, a concentration of lithium ions in the non-aqueous electrolyte solution is appropriate so that the battery may be charged and discharged properly, and, since viscosity of the non-aqueous electrolyte solution is appropriate to improve wetting in the battery, battery performance may be improved.

The lithium salt may be included in an amount of 5 wt% to 20 wt%, for example, 7 wt% to 15 wt% in the non-aqueous electrolyte solution. In a case in which the lithium salt is included in an amount within the above range, the concentration of the lithium ions in the non-aqueous electrolyte solution is appropriate so that the battery may be charged and discharged properly, and, since the viscosity of the non-aqueous electrolyte solution is appropriate to improve the wetting in the battery, the battery performance may be improved.

**(2) Compound Represented by Formula 1**

The present invention includes a compound represented by Formula 1 below.

[Formula 1]

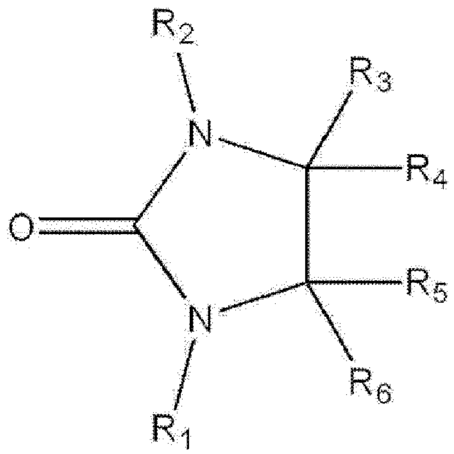

In Formula 1, $R_1$ and $R_2$ are each independently a substituent selected from an alkyl group having 1 to 10 carbon atoms and an aryl group having 6 to 14 carbon atoms, $R_3$, $R_4$, $R_5$, and $R_6$ are each independently a substituent selected from the group consisting of hydrogen, an alkyl group having 1 to 10 carbon atoms, an alkoxy group having 1 to 10 carbon atoms, and an aryl group having 6 to 14 carbon atoms, and, in one or more substituents of $R_1$, $R_2$, $R_3$, $R_4$, $R_5$, and $R_6$, at least one hydrogen is substituted with a halogen element which is selected from the group consisting of F, Br, Cl, and I.

With respect to a conventional non-aqueous electrolyte solution, a carbonate-based compound is generally included, and, specifically, a linear carbonate-based compound or a cyclic carbonate-based compound may be used as an organic solvent. In this case, with respect to the cyclic carbonate-based compound, there is a problem in that a gas by-product, such as CO and $CO_2$, is generated due to ring opening during battery operation. The gas by-product may cause problems of an increase in volume and a decrease in durability of the lithium secondary battery. Also, since the cyclic carbonate-based compound participates in a formation reaction of a solid electrolyte interface layer (hereinafter, referred to as SEI layer) of the negative electrode by reductive decomposition, oxidation stability of the compound is

important for stable operation and life characteristics of the lithium secondary battery.

In this aspect, the present invention is characterized in that the lithium ion transport properties, the electrochemical stability, and the battery durability may be improved by including the compound represented by Formula 1 in the non-aqueous electrolyte solution. Specifically, the compound represented by Formula 1, for example, may be partially substituted or totally substituted for the cyclic carbonate-based compound in the non-aqueous electrolyte solution. Since the compound represented by Formula 1 has a high melting point, has stable electrochemical properties, and does not generate the gas by-product even if it is decomposed during battery operation, the increase in the volume of the battery during the operation of the lithium secondary battery may be prevented, the battery durability may be greatly improved, and life performance of the battery may be significantly improved.

Also, since the compound represented by Formula 1 includes the halogen element, such as F, Br, Cl, and I, which may function as an electron withdrawing group in the compound, the oxidation stability of the compound may be improved to facilitate the reductive decomposition, and thus, the SEI layer of the negative electrode may be stably formed and ion transport performance may be achieved due to high permittivity properties. Accordingly, the non-aqueous electrolyte solution of the present invention may significantly improve output performance, life performance, and battery durability of the lithium secondary battery.

In Formula 1, the halogen element may be selected from the group consisting of F, Br, Cl, and I, and may specifically be F in terms of a high electron withdrawing effect and an oxidation stability improvement effect.

In Formula 1, $R_1$ and $R_2$ may each independently be a substituent selected from an alkyl group having 1 to 10 carbon atoms and an aryl group having 6 to 14 carbon atoms, specifically may each independently be an alkyl group having 1 to 5 carbon atoms in terms of preventing occurrence of steric hindrance of the compound and increasing mass transfer performance by preventing an increase in the viscosity of the non-aqueous electrolyte solution, and may more specifically be a methyl group. In a case in which $R_1$ and $R_2$ are hydrogen, it is not desirable because stability of the compound may be reduced due to reactivity of hydrogen connected to nitrogen.

In Formula 1, $R_3$, $R_4$, $R_5$, and $R_6$ may each independently be a substituent selected from the group consisting of hydrogen, an alkyl group having 1 to 10 carbon atoms, an alkoxy group having 1 to 10 carbon atoms, and an aryl group having 6 to 14 carbon atoms, specifically may each independently be a substituent selected from the group consisting of hydrogen, an alkyl group having 1 to 5 carbon atoms, and an alkoxy group having 1 to 5 carbon atoms in terms of preventing the occurrence of the steric hindrance of the compound and increasing the mass transfer performance by preventing the increase in the viscosity of the non-aqueous electrolyte solution, and more specifically may each independently be a substituent selected from the group consisting of hydrogen, a methyl group, and a methoxy group.

In one or more substituents of $R_1$, $R_2$, $R_3$, $R_4$, $R_5$, and $R_6$, at least one hydrogen may be substituted with a halogen element which is selected from the group consisting of F, Br, Cl, and I. The at least one halogen element (specifically, the halogen element selected from the group consisting of F, Br, Cl, and I) substituted for the one or more substituents of $R_1$, $R_2$, $R_3$, $R_4$, $R_5$, and $R_6$ may improve the lithium ion transport performance by functioning as an electron withdrawing group in the compound, and may improve the oxidation stability of the compound.

Specifically, in one or more substituents of $R_3$, $R_4$, $R_5$, and $R_6$, at least one hydrogen may be substituted with a halogen element which is selected from the group consisting of F, Br, Cl and I. More specifically, when the at least one hydrogen in the one or more substituents of $R_3$, $R_4$, $R_5$, and $R_6$ is substituted with the halogen element selected from the group consisting of F, Br, Cl, and I, the hydrogen present in $R_1$ and $R_2$ may not be substituted with the halogen element which is selected from the group consisting of F, Br, Cl, and I. The oxidation stability improvement effect obtained by substitution or presence of the halogen element in the compound is not limited to a substitution position, but, considering that the oxidation stability may be somewhat reduced by an electron donating effect of nitrogen adjacent to $R_1$ and $R_2$, it is desirable that the halogen element is present or substituted for one or more of $R_3$, $R_4$, $R_5$, and $R_6$.

More specifically, in one or more substituent of $R_3$, $R_4$, $R_5$, and $R_6$, at least one hydrogen may be substituted with a halogen element which is selected from the group consisting of F, Br, Cl and I. For example, at least one hydrogen present in $R_3$ may be substituted with a halogen element which is selected from the group consisting of F, Br, Cl, and I, and hydrogen present in $R_4$, $R_5$, and $R_6$ may not be substituted with a halogen element which is selected from the group consisting of F, Br, Cl, and I. In consideration of the increase in the viscosity of the non-aqueous electrolyte solution and prevention of degradation of the lithium ion transport performance due to an increase in the number of substituents as well as an improvement in the oxidation stability of the compound and the battery durability, it is desirable that the halogen element selected from the group consisting of F, Br, Cl, and I is substituted for the at least one hydrogen in the one substituent of $R_3$, $R_4$, $R_5$, and $R_6$.

More specifically, the one or more substituents of $R_3$, $R_4$, $R_5$, and $R_6$ may each independently be selected from a trifluoromethyl group ($-CF_3$) and a trifluoromethoxy group ($-OCF_3$). Preferably, the one substituent of $R_3$, $R_4$, $R_5$, and $R_6$ may be selected from a trifluoromethyl group and a trifluoromethoxy group. When the one substituent is the above substituent, the above-described lithium ion transport performance, battery durability, and oxidation stability improvement effect may be better achieved.

More specifically, the one or more substituents of $R_3$, $R_4$, $R_5$, and $R_6$ may each independently be a trifluoromethoxy group. Preferably, the one substituent of $R_3$, $R_4$, $R_5$, and $R_6$ may be a trifluoromethoxy group. When the one substituent is the above substituent, an additional improvement in the lithium ion transport performance may be expected due to oxygen present in the trifluoromethoxy group.

The compound represented by Formula 1 may include at least one selected from a compound represented by Formula 2 and a compound represented by Formula 3 below, and may specifically include the compound represented by Formula 3 below.

[Formula 2]

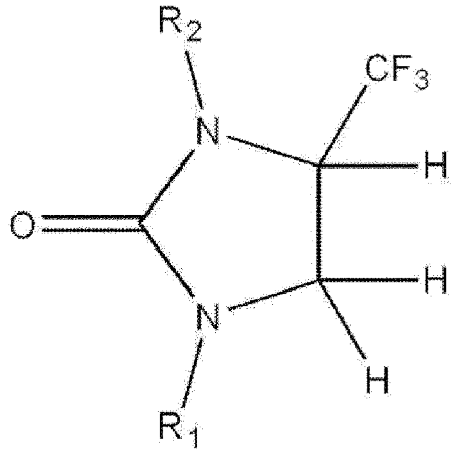

[Formula 3]

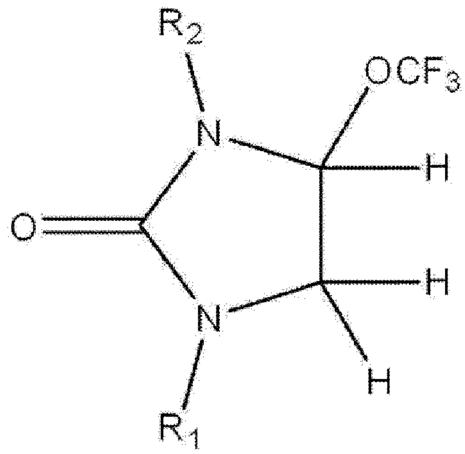

In Formulae 2 and 3, $R_1$ and $R_2$ may be as described in Formula 1 above. Specifically, in Formulae 2 and 3, $R_1$ and $R_2$ may each independently be a substituent selected from an alkyl group having 1 to 10 carbon atoms and an aryl group having 6 to 14 carbon atoms, specifically may each independently be an alkyl group having 1 to 5 carbon atoms in terms of preventing the occurrence of the steric hindrance of the compound and increasing the mass transfer performance by preventing the increase in the viscosity of the non-aqueous electrolyte solution, and may more specifically be a methyl group.

Specifically, the compound represented by Formula 1 may include at least one selected from a compound represented by Formula 4 and a compound represented by Formula 5 below.

[Formula 4]

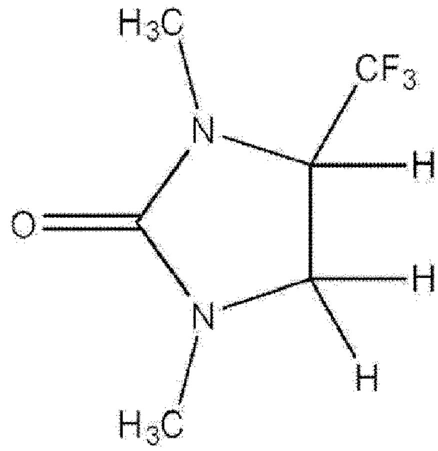

[Formula 5]

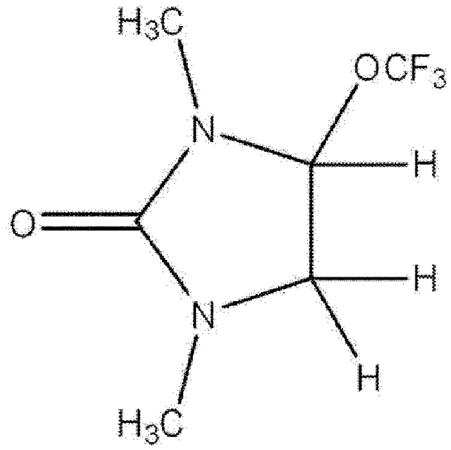

The compound represented by Formula 1 may be included in an amount of 0.2 wt% to 45 wt%, for example, 5 wt% to 30 wt% in the non-aqueous electrolyte solution. When the compound is included within the above range, the compound may further improve the lithium ion transport performance of the non-aqueous electrolyte solution, may stably form the SEI layer, and may prevent a problem of reducing wetting of the electrolyte and ionic conductivity due to an excessive increase in viscosity of the electrolyte.

**(3) Organic Solvent**

The non-aqueous electrolyte solution according to the present invention includes an organic solvent. The organic solvent is a non-aqueous solvent commonly used in a lithium secondary battery, wherein it is not particularly limited as long as decomposition due to an oxidation reaction during charge and discharge of the secondary battery may be minimized.

Specifically, the organic solvent may include at least one selected from a linear carbonate, a cyclic carbonate, a linear ester, a cyclic ester, an ether, a glyme, and a nitrile. The organic solvent may preferably include at least one selected from a linear carbonate and a cyclic carbonate, and may more preferably include a linear carbonate and a cyclic carbonate. Particularly, the conventional non-aqueous electrolyte solution may generally use a cyclic carbonate as an organic solvent for high permittivity and dissociation of the lithium salt, wherein this role of the cyclic carbonate may be partially replaced or totally replaced by the above-described compound represented by Formula 1. Particularly, since the compound represented by Formula 1 has high oxidation stability, has excellent lithium ion transport performance,

and does not generate the gas by-product to be able to improve the durability and life characteristics of the lithium secondary battery, excellent battery characteristics may be exhibited at a desirable level in comparison to a case where the cyclic carbonate is used.

The linear carbonate may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate.

The cyclic carbonate may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC).

Specific examples of the linear ester may be methyl acetate, ethyl acetate, propyl acetate, methyl propionate, ethyl propionate, propyl propionate, and butyl propionate, but the linear ester is not limited thereto.

Specific examples of the cyclic ester may be γ-butyrolactone, γ-valerolactone, γ-caprolactone, σ-valerolactone, and ε-caprolactone, but the cyclic ester is not limited thereto.

Specific examples of the ether may be dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL), but the ether is not limited thereto.

Specific examples of the glyme may be dimethoxyethane (glyme, DME), diethoxyethane, diglyme, tri-glyme (triglyme), and tetra-glyme (TEGDME), but the glyme is not limited thereto.

Specific examples of the nitrile may be acetonitrile, propionitrile, butyronitrile, valeronitrile, caprylontrile, heptanenitrile, cyclopentane carbonitrile, cyclohexane carbonitrile, 2-fluorobenzonitirle, 4-fluorobenzonitirle, difluorobenzonitirle, trifluorobenzonitirle, phenylacetonitrile, 2-fluorophenylacetonitrile, and 4-fluorophenylacetonitrile, but the nitrile is not limited thereto.

Specifically, the organic solvent may include the linear carbonate. The conventional non-aqueous electrolyte solution may generally use the cyclic carbonate together with the linear carbonate for high permittivity and the dissociation of the lithium salt, wherein this role of the cyclic carbonate may be partially replaced or totally replaced by the above-described compound represented by Formula 1. Particularly, since the compound represented by Formula 1 has high oxidation stability, has excellent lithium ion transport performance, and does not generate the gas by-product to be able to improve the durability and life characteristics of the lithium secondary battery, excellent battery characteristics may be exhibited at a desirable level in comparison to a case where the cyclic carbonate is used. More specifically, the organic solvent may be formed of the linear carbonate.

The organic solvent may be included in an amount of 48 wt% to 90 wt%, for example, 55 wt% to 80 wt% in the non-aqueous electrolyte solution.

### (4) Additive

The non-aqueous electrolyte solution may further include an additive.

Specifically, the non-aqueous electrolyte solution may further include at least one additive selected from the group consisting of vinylene carbonate, vinylethylene carbonate, propane sultone, succinonitrile, adiponitrile, ethylene sulfate, propene sultone, fluoroethylene carbonate, $LiPO_2F_2$, LiODFB (Lithium difluorooxalatoborate), LiBOB (Lithium bis-(oxalato)borate), TMSPa (3-trimethoxysilanyl-propyl-N-aniline), TMSPi (Tris(trimethylsilyl) Phosphite), and $LiBF_4$, and may specifically further include an additive including vinylene carbonate. When the additive is included in the non-aqueous electrolyte solution, it is desirable in terms of forming a stable solid electrolyte interface layer (SEI layer) on the negative electrode and suppressing an additional decomposition reaction of the electrolyte to be able to improve the life characteristics.

The additive may be included in an amount of 0.1 wt% to 15 wt%, for example, 0.3 wt% to 5 wt% in the non-aqueous electrolyte solution.

### Lithium Secondary Battery

Also, the present invention provides a lithium secondary battery including the above-described non-aqueous electrolyte solution.

Specifically, the lithium secondary battery according to the present invention includes a negative electrode; a positive electrode facing the negative electrode; a separator facing the negative electrode and the positive electrode; and the above-described non-aqueous electrolyte solution.

In this case, the lithium secondary battery of the present invention may be prepared according to a typical method known in the art. For example, after an electrode assembly is formed by sequentially stacking a positive electrode, a negative electrode, and a separator between the positive electrode and the negative electrode, the electrode assembly is inserted into a battery case, and the lithium secondary battery may be prepared by injecting the non-aqueous electrolyte

solution according to the present invention.

The negative electrode may include a negative electrode collector; and a negative electrode active material layer disposed on at least one surface of the negative electrode collector.

The negative electrode collector is not particularly limited as long as it has high conductivity without causing adverse chemical changes in the battery. Specifically, copper, stainless steel, aluminum, nickel, titanium, fired carbon, copper or stainless steel that is surface-treated with one of carbon, nickel, titanium, silver, or the like, or an aluminum-cadmium alloy may be used as the negative electrode collector.

The negative electrode collector may typically have a thickness of 3 um to 500 μm.

Microscopic irregularities may be formed on the surface of the negative electrode collector to improve adhesion of a negative electrode active material. For example, the negative electrode collector may be used in various shapes such as that of a film, a sheet, a foil, a net, a porous body, a foam body, a non-woven fabric body, and the like.

The negative electrode active material layer is disposed on at least one surface of the negative electrode collector. Specifically, the negative electrode active material layer may be disposed on one surface or both surfaces of the negative electrode collector.

The negative electrode active material layer may include a negative electrode active material.

The negative electrode active material is a material capable of reversibly intercalating/deintercalating lithium ions, wherein it may include at least one selected from the group consisting of a carbon-based active material, a (semi)metal-based active material, and a lithium metal, and may specifically include at least one selected from a carbon-based active material and a (semi)metal-based active material.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

An average particle diameter ($D_{50}$) of the carbon-based active material may be in a range of 10 um to 30 μm, for example, 15 um to 25 um in terms of reducing a side reaction with the electrolyte solution and ensuring structural stability during charge and discharge.

Specifically, the (semi)metal-based active material may include at least one (semi)metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), vanadium (V), titanium (Ti), and tin (Sn); an alloy of lithium and the at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of the at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); or lithium vanadium oxide.

More specifically, the (semi)metal-based active material may include a silicon-based active material.

The silicon-based active material may include a compound represented by $SiO_x$ ($0 \leq x < 2$). Since $SiO_2$ may not store lithium because it does not react with lithium ions, x is preferably within the above range and the silicon-based oxide may more preferably be SiO.

An average particle diameter ($D_{50}$) of the silicon-based active material may be in a range of 1 um to 30 μm, for example, 2 um to 15 um in terms of reducing the side reaction with the electrolyte solution and ensuring the structural stability during charge and discharge.

The negative electrode active material may be included in an amount of 60 wt% to 99 wt%, for example, 75 wt% to 95 wt% in the negative electrode active material layer.

The negative electrode active material layer may further include a binder and/or a conductive agent together with the negative electrode active material.

The binder is used to improve performance of the battery by improving adhesion between the negative electrode active material layer and the negative electrode collector, wherein, for example, the binder may include at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, a styrene-butadiene rubber (SBR), a fluorine rubber, and a material having hydrogen thereof substituted with lithium (Li), sodium (Na), or calcium (Ca), or may include various copolymers thereof.

The binder may be included in an amount of 0.5 wt% to 10 wt%, for example, 1 wt% to 5 wt% in the negative electrode active material layer.

The conductive agent is not particularly limited as long as it has conductivity without causing adverse chemical changes in the battery, wherein, for example, a conductive material, such as: graphite such as natural graphite or artificial graphite; carbon black such as carbon black, acetylene black, Ketjen black, channel black, furnace black, lamp black, and thermal black; conductive fibers such as carbon fibers and metal fibers; conductive tubes such as carbon nanotubes;

fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 10 wt%, for example, 1 wt% to 5 wt% in the negative electrode active material layer.

A thickness of the negative electrode active material layer may be in a range of 10 um to 100 μm, for example, 50 um to 80 μm.

The negative electrode may be prepared by coating a negative electrode slurry including the negative electrode active material, the binder, the conductive agent, and/or a solvent for forming the negative electrode slurry on at least one surface of the negative electrode collector, and then drying and rolling the coated negative electrode collector.

The solvent for forming the negative electrode slurry, for example, may include at least one selected from the group consisting of distilled water, N-methyl-2-pyrrolidone (NMP), ethanol, methanol, and isopropyl alcohol, preferably, distilled water in terms of facilitating dispersion of the negative electrode active material, the binder, and/or the conductive agent. A solid content of the negative electrode slurry may be in a range of 30 wt% to 80 wt%, for example, 40 wt% to 70 wt%.

The positive electrode faces the negative electrode.

The positive electrode may include a positive electrode collector; and a positive electrode active material layer disposed on at least one surface of the positive electrode collector.

The positive electrode collector is not particularly limited as long as it has high conductivity without causing adverse chemical changes in the battery. Specifically, the positive electrode collector may include at least one selected from the group consisting of copper, stainless steel, aluminum, nickel, titanium, fired carbon, and an aluminum-cadmium alloy, preferably, aluminum.

The positive electrode collector may typically have a thickness of 3 um to 500 μm.

Microscopic irregularities may be formed on the surface of the positive electrode collector to improve adhesion of a positive electrode active material. For example, the positive electrode collector may be used in various shapes such as that of a film, a sheet, a foil, a net, a porous body, a foam body, a non-woven fabric body, and the like.

The positive electrode active material layer is disposed on at least one surface of the positive electrode collector. Specifically, the positive electrode active material layer may be disposed on one surface or both surfaces of the positive electrode collector.

The positive electrode active material layer may include a positive electrode active material.

The positive electrode active material is a compound capable of reversibly intercalating and deintercalating lithium, wherein the positive electrode active material may specifically include a lithium transition metal composite oxide including lithium and at least one transition metal selected from the group consisting of nickel, cobalt, manganese, and aluminum, preferably, a lithium transition metal composite oxide including lithium and transition metal containing nickel, cobalt, and manganese.

For example, the lithium transition metal composite oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), lithium-nickel-cobalt-based oxide (e.g., $LiNi_{1-Y1}Co_{Y1}O_2$ (where $0<Y1<1$), lithium-manganese-cobalt-based oxide (e.g., $LiCo_{1-Y2}Mn_{Y2}O_2$ (where $0<Y2<1$), $LiMn_{2-Z1}Co_{z1}O_4$ (where $0<Z1<2$), etc.), lithium-nickel-manganese-cobalt-based oxide (e.g., $Li(Ni_pCo_qMn_{r1})O_2$ (where $0<p<1$, $0<q<1$, $0<r1<1$, and $p+q+r1=1$) or $Li(Ni_{p1}Co_{q1}Mn_{r2})O_4$ (where $0<p1<2$, $0<q1<2$, $0<r2<2$, and $p1+q1+r2=2$), etc.), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein $0<p2<1$, $0<q2<1$, $0<r3<1$, $0<S2<1$, and $p2+q2+r3+S2=1$), etc.), and any one thereof or a mixture of two or more thereof may be included. Among these materials, in terms of the improvement of capacity characteristics and stability of the battery, the lithium transition metal composite oxide may be $LiCoO_2$, $LiMnO_2$, $LiNiO_2$, lithium nickel-manganese-cobalt oxide (e.g., Li $(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or lithium nickel cobalt aluminum oxide (e.g., Li $(Ni_{0.8}Co_{0.15}Al_{0.05})O_2$, etc.), and, in consideration of a significant improvement effect due to the control of types and content ratios of components constituting the lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and any one thereof or a mixture of two or more thereof may be used.

More specifically, the positive electrode active material, as a lithium transition metal composite oxide, may include 60 mol% or more of nickel based on the total number of moles of transition metals included in the lithium transition metal composite oxide. Specifically, the positive electrode active material is a lithium transition metal composite oxide, wherein the transition metal includes nickel; and at least one selected from manganese, cobalt, and aluminum, and the positive electrode active material may include nickel in an amount of 60 mol% or more, for example, 60 mol% to 90 mol% based on the total number of moles of the transition metals. When the lithium transition metal composite oxide

using a high content of nickel is used together with the above-described non-aqueous electrolyte solution, it is desirable in terms of reducing a gas-phase by-product generated by structural collapse.

The positive electrode active material may be included in an amount of 80 wt% to 99 wt%, for example, 92 wt% to 98.5 wt% in the positive electrode active material layer in consideration of exhibition of sufficient capacity of the positive electrode active material.

The positive electrode active material layer may further include a binder and/or a conductive agent together with the above-described positive electrode active material.

The binder is a component that assists in binding between the conductive agent and the active material and in binding with the current collector, and may specifically include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, preferably, polyvinylidene fluoride.

The binder may be included in an amount of 1 wt% to 20 wt%, for example, 1.2 wt% to 10 wt% in the positive electrode active material layer in terms of sufficiently securing a binding force between components such as the positive electrode active material.

The conductive agent may be used to assist and improve conductivity in the secondary battery, and is not particularly limited as long as it has conductivity without causing adverse chemical changes. Specifically, the positive electrode conductive agent may include at least one selected from the group consisting of graphite such as natural graphite or artificial graphite; carbon black such as carbon black, acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder and nickel powder; conductive whiskers such as zinc oxide whiskers and potassium titanate whiskers; conductive metal oxide such as titanium oxide; and polyphenylene derivatives, and may preferably include carbon black in terms of improving the conductivity.

The conductive agent may be included in an amount of 1 wt% to 20 wt%, for example, 1.2 wt% to 10 wt% in the positive electrode active material layer in terms of sufficiently ensuring the electrical conductivity.

A thickness of the positive electrode active material layer may be in a range of 30 um to 400 μm, for example, 40 um to 110 um.

The positive electrode may be prepared by coating a positive electrode slurry including the positive electrode active material as well as optionally the binder, the conductive agent, and a solvent for forming the positive electrode slurry on the positive electrode collector, and then drying and rolling the coated positive electrode collector.

The solvent for forming the positive electrode slurry may include an organic solvent such as N-methyl-2-pyrrolidone (NMP). A solid content of the positive electrode slurry may be in a range of 40 wt% to 90 wt%, for example, 50 wt% to 80 wt%.

The separator is disposed between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

A shape of the lithium secondary battery of the present invention is not particularly limited, but may, for example, be a cylindrical type, a prismatic type, a pouch type, or a coin type.

The lithium secondary battery according to the present invention may be used in a battery cell that is used as a power source of a small device, or may also be used as a unit cell of a medium and large sized battery module including a plurality of battery cells.

The lithium secondary battery according to the present invention may be suitably used in portable devices, such as mobile phones, notebook computers, and digital cameras, and electric cars such as a hybrid electric vehicle (HEV) and an electric vehicle (EV).

Also, the present invention provides a battery module including the lithium secondary battery as a unit cell and a battery pack including the battery module.

The battery module or the battery pack may be used as a power source of a medium and large sized device selected from the group consisting of a power tool; an electric car; a hybrid electric vehicle; and a power storage system.

Hereinafter, the present invention will be described in detail, according to specific examples. However, the following examples are merely presented to exemplify the present invention, and the scope of the present invention is

not limited thereto. It will be apparent to those skilled in the art that various modifications and alterations are possible within the scope and technical spirit of the present invention, and such modifications and alterations fall within the scope of claims included herein.

## Examples

Example 1: Preparation of Non-aqueous Electrolyte Solution

A non-aqueous electrolyte solution was prepared by mixing $LiPF_6$ as a lithium salt, a mixture of ethylene carbonate (EC) and ethylmethyl carbonate (EMC) in a weight ratio of 31.0:55.9 (volume ratio of about 30:70) as an organic solvent, a compound represented by the following Formula 4, and vinylene carbonate as an additive.

[Formula 4]

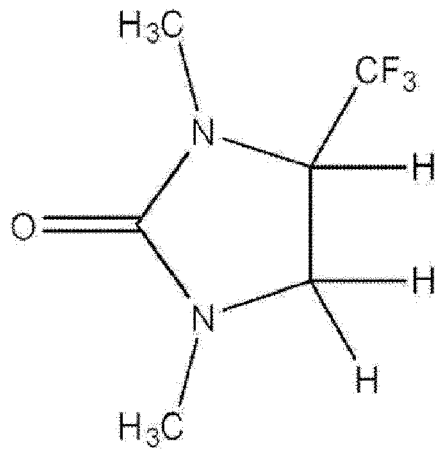

The lithium salt was included in the non-aqueous electrolyte solution at a concentration of 1 M (included in an amount of 12.0 wt% in the non-aqueous electrolyte solution).
The vinylene carbonate was included in an amount of 0.5 wt% in the non-aqueous electrolyte solution.
The compound represented by Formula 4 was included in an amount of 0.5 wt% in the non-aqueous electrolyte solution, and the organic solvent was included in an amount of 87.0 wt% in the non-aqueous electrolyte solution.

Example 2: Preparation of Non-aqueous Electrolyte Solution

A non-aqueous electrolyte solution was prepared by mixing $LiPF_6$ as a lithium salt, a mixture of ethylene carbonate (EC) and ethylmethyl carbonate (EMC) in a weight ratio of 30.1:54.3 (volume ratio of about 30:70) as an organic solvent, the compound represented by Formula 4, and vinylene carbonate as an additive.
The lithium salt was included in the non-aqueous electrolyte solution at a concentration of 1 M (included in an amount of 12.1 wt% in the non-aqueous electrolyte solution).
The vinylene carbonate was included in an amount of 0.5 wt% in the non-aqueous electrolyte solution.
The compound represented by Formula 4 was included in an amount of 3.0 wt% in the non-aqueous electrolyte solution, and the organic solvent was included in an amount of 84.4 wt% in the non-aqueous electrolyte solution.

Example 3: Preparation of Non-aqueous Electrolyte Solution

A non-aqueous electrolyte solution was prepared in the same manner as in Example 1 except that a compound represented by the following Formula 5 was used instead of the compound represented by Formula 4.

[Formula 5]

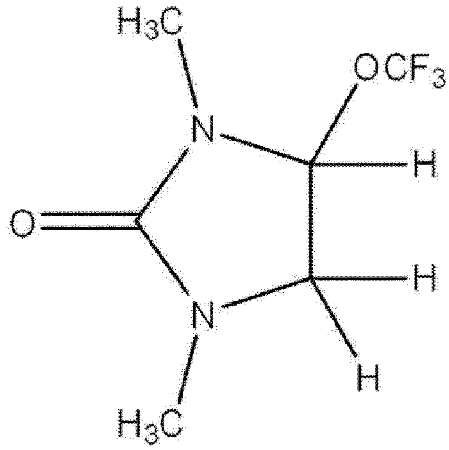

Example 4: Preparation of Non-aqueous Electrolyte Solution

A non-aqueous electrolyte solution was prepared in the same manner as in Example 2 except that the compound represented by Formula 5 was used instead of the compound represented by Formula 4.

Example 5: Preparation of Non-aqueous Electrolyte Solution

A non-aqueous electrolyte solution was prepared by mixing $LiPF_6$ as a lithium salt, ethylmethyl carbonate (EMC) as an organic solvent, the compound represented by Formula 4, and vinylene carbonate as an additive.

The lithium salt was included in the non-aqueous electrolyte solution at 1 M (included in an amount of 13.0 wt% in the non-aqueous electrolyte solution).

The vinylene carbonate was included in an amount of 0.5 wt% in the non-aqueous electrolyte solution.

The compound represented by Formula 4 was included in an amount of 25.8 wt% in the non-aqueous electrolyte solution, and the organic solvent was included in an amount of 60.7 wt% in the non-aqueous electrolyte solution.

Example 6: Preparation of Non-aqueous Electrolyte Solution

A non-aqueous electrolyte solution was prepared by mixing $LiPF_6$ as a lithium salt, a mixture of ethylene carbonate (EC) and ethylmethyl carbonate (EMC) in a weight ratio of 21.3:57.7 (volume ratio of about 20:70) as an organic solvent, the compound represented by Formula 4, and vinylene carbonate as an additive.

The lithium salt was included in the non-aqueous electrolyte solution at 1 M (included in an amount of 12.3 wt% in the non-aqueous electrolyte solution).

The vinylene carbonate was included in an amount of 0.5 wt% in the non-aqueous electrolyte solution.

The compound represented by Formula 4 was included in an amount of 8.2 wt% in the non-aqueous electrolyte solution, and the organic solvent was included in an amount of 79.0 wt% in the non-aqueous electrolyte solution.

Example 7: Preparation of Non-aqueous Electrolyte Solution

A non-aqueous electrolyte solution was prepared by mixing $LiPF_6$ as a lithium salt, ethylmethyl carbonate (EMC) as an organic solvent, the compound represented by Formula 5, and vinylene carbonate as an additive.

The lithium salt was included in the non-aqueous electrolyte solution at 1 M (included in an amount of 13.1 wt% in the non-aqueous electrolyte solution).

The vinylene carbonate was included in an amount of 0.5 wt% in the non-aqueous electrolyte solution.

The compound represented by Formula 5 was included in an amount of 25.4 wt% in the non-aqueous electrolyte solution, and the organic solvent was included in an amount of 61.1 wt% in the non-aqueous electrolyte solution.

Example 8: Preparation of Non-aqueous Electrolyte Solution

A non-aqueous electrolyte solution was prepared by mixing $LiPF_6$ as a lithium salt, a mixture of ethylene

carbonate (EC) and ethylmethyl carbonate (EMC) in a weight ratio of 21.4:57.8 (volume ratio of about 20:70) as an organic solvent, the compound represented by Formula 5, and vinylene carbonate as an additive.

The lithium salt was included in the non-aqueous electrolyte solution at 1 M (included in an amount of 12.4 wt% in the non-aqueous electrolyte solution).

The vinylene carbonate was included in an amount of 0.5 wt% in the non-aqueous electrolyte solution.

The compound represented by Formula 5 was included in an amount of 8.0 wt% in the non-aqueous electrolyte solution, and the organic solvent was included in an amount of 79.1 wt% in the non-aqueous electrolyte solution.

Example 9: Preparation of Non-aqueous Electrolyte Solution

A non-aqueous electrolyte solution was prepared by mixing $LiPF_6$ as a lithium salt, ethylmethyl carbonate (EMC) as an organic solvent, the compound represented by Formula 4, and vinylene carbonate as an additive.

The lithium salt was included in the non-aqueous electrolyte solution at 1 M (included in an amount of 13.0 wt% in the non-aqueous electrolyte solution).

The vinylene carbonate was included in an amount of 0.5 wt% in the non-aqueous electrolyte solution.

The compound represented by Formula 4 was included in an amount of 34.4 wt% in the non-aqueous electrolyte solution, and the organic solvent was included in an amount of 52.1 wt% in the non-aqueous electrolyte solution.

Example 10: Preparation of Non-aqueous Electrolyte Solution

A non-aqueous electrolyte solution was prepared by mixing $LiPF_6$ as a lithium salt, ethylmethyl carbonate (EMC) as an organic solvent, the compound represented by Formula 5, and vinylene carbonate as an additive.

The lithium salt was included in the non-aqueous electrolyte solution at 1 M (included in an amount of 13.1 wt% in the non-aqueous electrolyte solution).

The vinylene carbonate was included in an amount of 0.5 wt% in the non-aqueous electrolyte solution.

The compound represented by Formula 5 was included in an amount of 34.0 wt% in the non-aqueous electrolyte solution, and the organic solvent was included in an amount of 52.5 wt% in the non-aqueous electrolyte solution.

Comparative Example 1: Preparation of Non-aqueous Electrolyte Solution

A non-aqueous electrolyte solution was prepared by mixing $LiPF_6$ as a lithium salt, a mixture of ethylene carbonate (EC) and ethylmethyl carbonate (EMC) in a weight ratio of 31.2:56.3 (volume ratio of about 30:70) as an organic solvent, and vinylene carbonate as an additive.

The lithium salt was included in the non-aqueous electrolyte solution at 1 M (included in an amount of 12.0 wt% in the non-aqueous electrolyte solution).

The vinylene carbonate was included in an amount of 0.5 wt% in the non-aqueous electrolyte solution.

The organic solvent was included in an amount of 87.5 wt% in the non-aqueous electrolyte solution.

Comparative Example 2: Preparation of Non-aqueous Electrolyte Solution

A non-aqueous electrolyte solution was prepared in the same manner as in Example 1 except that a compound represented by the following Formula 6 was used instead of the compound represented by Formula 4.

[Formula 6]

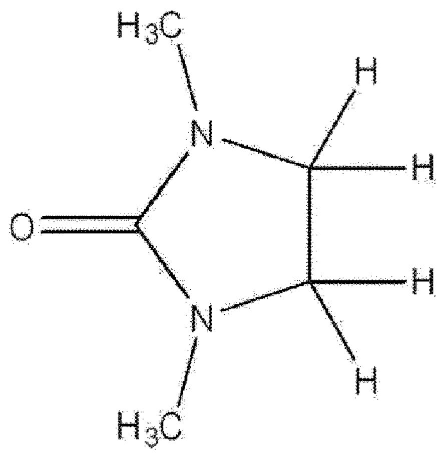

Comparative Example 3: Preparation of Non-aqueous Electrolyte Solution

A non-aqueous electrolyte solution was prepared in the same manner as in Example 2 except that the compound represented by Formula 6 was used instead of the compound represented by Formula 4.

Comparative Example 4: Preparation of Non-aqueous Electrolyte Solution

A non-aqueous electrolyte solution was prepared in the same manner as in Example 1 except that a compound represented by the following Formula 7 was used instead of the compound represented by Formula 4.

[Formula 7]

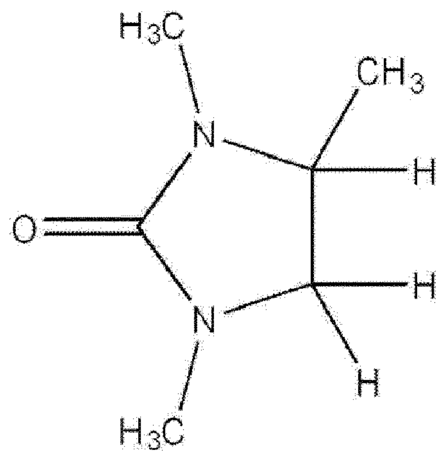

Comparative Example 5: Preparation of Non-aqueous Electrolyte Solution

A non-aqueous electrolyte solution was prepared in the same manner as in Example 2 except that the compound represented by Formula 7 was used instead of the compound represented by Formula 4.

Comparative Example 6: Preparation of Non-aqueous Electrolyte Solution

A non-aqueous electrolyte solution was prepared by mixing $LiPF_6$ as a lithium salt, ethylmethyl carbonate (EMC) as an organic solvent, the compound represented by Formula 6, and vinylene carbonate as an additive.

The lithium salt was included in the non-aqueous electrolyte solution at 1 M (included in an amount of 12.9 wt% in the non-aqueous electrolyte solution).

The vinylene carbonate was included in an amount of 0.5 wt% in the non-aqueous electrolyte solution.

The compound represented by Formula 6 was included in an amount of 26.5 wt% in the non-aqueous electrolyte

solution, and the organic solvent was included in an amount of 60.1 wt% in the non-aqueous electrolyte solution.

Comparative Example 7: Preparation of Non-aqueous Electrolyte Solution

A non-aqueous electrolyte solution was prepared by mixing $LiPF_6$ as a lithium salt, a mixture of ethylene carbonate (EC) and ethylmethyl carbonate (EMC) in a weight ratio of 21.3:57.5 (volume ratio of about 20:70) as an organic solvent, the compound represented by Formula 6, and vinylene carbonate as an additive.

The lithium salt was included in the non-aqueous electrolyte solution at 1 M (included in an amount of 12.3 wt% in the non-aqueous electrolyte solution).

The vinylene carbonate was included in an amount of 0.5 wt% in the non-aqueous electrolyte solution.

The compound represented by Formula 6 was included in an amount of 8.5 wt% in the non-aqueous electrolyte solution, and the organic solvent was included in an amount of 78.8 wt% in the non-aqueous electrolyte solution.

Comparative Example 8: Preparation of Non-aqueous Electrolyte Solution

A non-aqueous electrolyte solution was prepared by mixing $LiPF_6$ as a lithium salt, ethylmethyl carbonate (EMC) as an organic solvent, the compound represented by Formula 7, and vinylene carbonate as an additive.

The lithium salt was included in the non-aqueous electrolyte solution at 1 M (included in an amount of 12.9 wt% in the non-aqueous electrolyte solution).

The vinylene carbonate was included in an amount of 0.5 wt% in the non-aqueous electrolyte solution.

The compound represented by Formula 7 was included in an amount of 26.2 wt% in the non-aqueous electrolyte solution, and the organic solvent was included in an amount of 60.4 wt% in the non-aqueous electrolyte solution.

Comparative Example 9: Preparation of Non-aqueous Electrolyte Solution

A non-aqueous electrolyte solution was prepared by mixing $LiPF_6$ as a lithium salt, a mixture of ethylene carbonate (EC) and ethylmethyl carbonate (EMC) in a weight ratio of 21.3:57.6 (volume ratio of about 20:70) as an organic solvent, the compound represented by Formula 7, and vinylene carbonate as an additive.

The lithium salt was included in the non-aqueous electrolyte solution at 1 M (included in an amount of 12.3 wt% in the non-aqueous electrolyte solution).

The vinylene carbonate was included in an amount of 0.5 wt% in the non-aqueous electrolyte solution.

The compound represented by Formula 7 was included in an amount of 8.3 wt% in the non-aqueous electrolyte solution, and the organic solvent was included in an amount of 78.9 wt% in the non-aqueous electrolyte solution.

[Table 1]

| | Non-aqueous electrolyte solution | | | | | |
|---|---|---|---|---|---|---|
| | Lithium salt ($LiPF_6$) | Organic solvent | | Imidazolinone compound | | Vinylene carbonate |
| | Wt% (based on the non-aqueous electrolyte solution | Type | Wt% (based on the non-aqueous electroly te solution | Type | Wt% (based on the non-aqueous electroly te solution | Wt% (based on the non-aqueous electroly te solution |
| Example 1 | 12.0 | EC and EMC (volume ratio of about 30: 70) | 87.0 | Formula 4 | 0.5 | 0.5 |
| Example 2 | 12.1 | EC and EMC (volume ratio of about 30: 70) | 84.4 | Formula 4 | 3.0 | 0.5 |

(continued)

| | Non-aqueous electrolyte solution | | | | | |
|---|---|---|---|---|---|---|
| | Lithium salt ($LiPF_6$) | Organic solvent | | Imidazolinone compound | | Vinylene carbonate |
| | Wt% (based on the non-aqueous electrolyte solution | Type | Wt% (based on the non-aqueous electroly te solution | Type | Wt% (based on the non-aqueous electroly te solution | Wt% (based on the non-aqueous electroly te solution |
| Example 3 | 12.0 | EC and EMC (volume ratio of about 30: 70) | 87.0 | Formula 5 | 0.5 | 0.5 |
| Example 4 | 12.1 | EC and EMC (volume ratio of about 30: 70) | 84.4 | Formula 5 | 3.0 | 0.5 |
| Example 5 | 13.0 | EMC | 60.7 | Formula 4 | 25.8 | 0.5 |
| Example 6 | 12.3 | EC and EMC (volume ratio of about 20: 70) | 79.0 | Formula 4 | 8.2 | 0.5 |
| Example 7 | 13.1 | EMC | 61.1 | Formula 5 | 25.4 | 0.5 |
| Example 8 | 12.4 | EC and EMC (volume ratio of about 20: 70) | 79.1 | Formula 5 | 8.0 | 0.5 |
| Example 9 | 13.0 | EMC | 52.1 | Formula 4 | 34.4 | 0.5 |
| Example 10 | 13.1 | EMC | 52.5 | Formula 5 | 34.0 | 0.5 |
| Comparative Example 1 | 12.0 | EC and EMC (volume ratio of about 30: 70) | 87.5 | - | - | 0.5 |

(continued)

| | Non-aqueous electrolyte solution | | | | | |
|---|---|---|---|---|---|---|
| | Lithium salt ($LiPF_6$) | Organic solvent | | Imidazolinone compound | | Vinylene carbonate |
| | Wt% (based on the non-aqueous electrolyte solution | Type | Wt% (based on the non-aqueous electroly te solution | Type | Wt% (based on the non-aqueous electroly te solution | Wt% (based on the non-aqueous electroly te solution |
| Comparative Example 2 | 12.0 | EC and EMC (volume ratio of about 30: 70) | 87.0 | Formula 6 | 0.5 | 0.5 |
| Comparative Example 3 | 12.1 | EC and EMC (volume ratio of about 30: 70) | 84.4 | Formula 6 | 3.0 | 0.5 |
| Comparative Example 4 | 12.0 | EC and EMC (volume ratio of about 30: 70) | 87.0 | Formula 7 | 0.5 | 0.5 |
| Comparative Example 5 | 12.1 | EC and EMC (volume ratio of about 30: 70) | 84.4 | Formula 7 | 3.0 | 0.5 |
| Comparative Example 6 | 12.9 | EMC | 60.1 | Formula 6 | 26.5 | 0.5 |
| Comparative Example 7 | 12.3 | EC and EMC (volume ratio of about 20: 70) | 78.8 | Formula 6 | 8.5 | 0.5 |
| Comparative Example 8 | 12.9 | EMC | 60.4 | Formula 7 | 26.2 | 0.5 |
| Comparative Example 9 | 12.3 | EC and EMC (volume ratio of about 20: 70) | 78.9 | Formula 7 | 8.3 | 0.5 |

## Experimental Examples

<Preparation of Secondary battery>

1. Preparation of Negative Electrode

Artificial graphite as a negative electrode active material, carbon black (product name: Super C65, manufacturer: Timcal) as a conductive agent, an acryl-based binder (BM-L302, manufactured by Zeon Corporation) as a binder, and carboxymethylcellulose, as a thickener, were added to distilled water, as a solvent for forming a negative electrode slurry, at a weight ratio of 95:1.5:2.3:1.2 to prepare a negative electrode slurry.

One surface of a copper current collector, as a negative electrode collector, was coated with the negative electrode slurry at a loading amount of 350 mg/25 $cm^2$, roll-pressed, and dried in a vacuum oven at 130°C for 10 hours to form a negative electrode active material layer, and this was used as a negative electrode.

2. Preparation of Positive Electrode

$Li[Ni_{0.86}Co_{0.05}Mn_{0.07}Al_{0.02}]O_2$ as positive electrode active material, carbon black (product name: Super C65, manufacturer: Timcal) as a conductive agent, and polyvinylidene fluoride (PVdF), as a binder, were added to N-methyl-2-pyrrolidone (NMP), as a solvent for forming a positive electrode slurry, at a weight ratio of 97.5:1.5:1.0 to prepare a positive electrode slurry.

One surface of an aluminum current collector, as a positive electrode collector, was coated with the positive electrode slurry at a loading amount of 607 mg/25 $cm^2$, roll-pressed, and dried in a vacuum oven at 130°C for 10 hours to form a positive electrode active material layer, and this was used as a positive electrode.

3. Preparation of Lithium Secondary Batteries

After a porous separator was disposed between the above-prepared positive electrode and negative electrode in a battery case, the non-aqueous electrolyte solution prepared in Example 1 was injected to prepare a lithium secondary battery of Example 1.

Lithium secondary batteries of Examples 2 to 10 and Comparative Examples 1 to 9 were respectively prepared in the same manner as the method of preparing the lithium secondary battery of Example 1 except that the non-aqueous electrolyte solutions of Examples 2 to 10 and Comparative Examples 1 to 9 were used instead of the non-aqueous electrolyte solution of Example 1.

Experimental Example 1: High-temperature Cycle Capacity Retention Evaluation

The lithium secondary batteries of Examples 1 to 10 and Comparative Examples 1 to 9 were used to evaluate high-temperature cycle capacity retentions.

Specifically, that each of the lithium secondary batteries of Examples 1 to 10 and Comparative Examples 1 to 9 was charged at 0.33 C to 4.2 V under a constant current/constant voltage (CC/CV) condition at 45°C using electrochemical charge/discharge equipment and was then discharged at a CC of 0.33 C to 3 V was set as one cycle, and 200 cycles of the charging and discharging were performed, and capacity retentions were measured.

The capacity retention was calculated by the following equation, and the results thereof are presented in Table 2 below.

$$\text{Capacity retention(\%)} = (\text{discharge capacity after 200 cycles}/\text{discharge capacity after one cycle}) \times 100$$

Experimental Example 2: Initial Resistance and Resistance Increase Rate Evaluation

That each of the lithium secondary batteries of Examples 1 to 10 and Comparative Examples 1 to 9 was charged at 0.33 C to 4.2 V under a CC/CV condition at 45°C and was then discharged at a CC of 0.33 C to 3 V was set as one cycle, and 200 cycles of the charging and discharging were performed.

After one cycle of the charging and discharging, discharge capacity after one cycle was measured using electrochemical charge/discharge equipment, a state of charge (SOC) was adjusted to 50%, and a pulse of 2.5 C was then applied for 10 seconds to calculate initial resistance through a difference between a voltage before the application of

the pulse and a voltage after the application of the pulse.

After 200 cycles of the charging and discharging, resistance after 200 cycles was calculated in the same manner as above, a resistance increase rate was calculated using the following equation, and the results thereof are presented in Table 2 below.

Resistance increase rate(%) = (resistance after 200 cycles - initial resistance)/initial resistance × 100

Experimental Example 3: Volume Increase Rate

200 cycles of charging and discharging of the lithium secondary batteries of Examples 1 to 10 and Comparative Examples 1 to 9 were performed in the same manner as in Experimental Example 1. In this case, a volume (initial volume) of the lithium secondary battery before the charging and discharging and a volume of the lithium secondary battery after 200 cycles were measured, a volume increase rate was calculated by the following equation, and the results thereof are presented in Table 2 below.

Volume increase rate(%) = (volume of the lithium secondary battery after 200 cycles - initial volume)/initial volume × 100

[Table 2]

| | Experimental Example 1 | Experimental Example 2 | | Experimental Example 3 |
|---|---|---|---|---|
| | Capacity retention (%) | Initial resistance (mOhm) | Resistance increase rate (%) | Volume increase rate (%) |
| Example 1 | 92.4 | 8.54 | 5.5 | 23.4 |
| Example 2 | 93.5 | 8.97 | 5.1 | 21.0 |
| Example 3 | 95.7 | 7.45 | 3.5 | 18.4 |
| Example 4 | 96.3 | 7.56 | 3.2 | 15.7 |
| Example 5 | 97.3 | 3.45 | 2.6 | 5.4 |
| Example 6 | 96.7 | 4.25 | 3.1 | 6.9 |
| Example 7 | 98.8 | 2.47 | 1.1 | 3.4 |
| Example 8 | 98.3 | 3.10 | 1.4 | 4.1 |
| Example 9 | 91.2 | 6.23 | 10.6 | 12.3 |
| Example 10 | 92.3 | 5.95 | 9.7 | 10.4 |
| Comparative Example 1 | 85.3 | 12.51 | 15.6 | 59.7 |
| Comparative Example 2 | 87.7 | 11.54 | 13.4 | 51.3 |
| Comparative Example 3 | 88.5 | 11.98 | 13.1 | 50.4 |
| Comparative Example 4 | 87.2 | 12.13 | 12.8 | 48.7 |

(continued)

| | Experimental Example 1 | Experimental Example 2 | | Experimental Example 3 |
|---|---|---|---|---|
| | Capacity retention (%) | Initial resistance (mOhm) | Resistance increase rate (%) | Volume increase rate (%) |
| Comparative Example 5 | 88.1 | 12.55 | 12.1 | 47.1 |
| Comparative Example 6 | 78.2 | 9.45 | 35.6 | 40.3 |
| Comparative Example 7 | 82.4 | 10.35 | 28.4 | 45.1 |
| Comparative Example 8 | 79.3 | 9.98 | 32.6 | 39.4 |
| Comparative Example 9 | 83.8 | 11.20 | 27.5 | 42.2 |

Referring to Table 2, it may be confirmed that the lithium secondary batteries of Examples 1 to 10 using the non-aqueous electrolyte solution containing the compound represented by Formula 1 had better high-temperature cycle life performance, lower initial resistance, lower resistance increase rate with cycles, and less volume increase with cycles than the lithium secondary batteries of Comparative Examples 1 to 9.

## Claims

**1.** A non-aqueous electrolyte solution comprising:

a lithium salt;
an organic solvent; and
a compound represented by Formula 1:

[Formula 1]

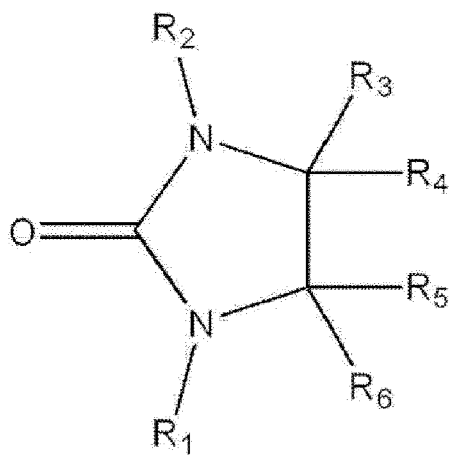

wherein, in Formula 1, $R_1$ and $R_2$ are each independently a substituent selected from an alkyl group having 1 to 10 carbon atoms and an aryl group having 6 to 14 carbon atoms, and $R_3$, $R_4$, $R_5$, and $R_6$ are each independently a substituent selected from the group consisting of hydrogen, an alkyl group having 1 to 10 carbon atoms, an alkoxy group having 1 to 10 carbon atoms, and an aryl group having 6 to 14 carbon atoms, and
in one or more substituents of $R_1$, $R_2$, $R_3$, $R_4$, $R_5$, and $R_6$, at least one hydrogen is substituted with a halogen

element which is selected from the group consisting of fluorine (F), bromine (Br), chlorine (Cl), and iodine (I).

2. The non-aqueous electrolyte solution of claim 1, wherein the compound represented by Formula 1 is included in an amount of 0.2 wt% to 45 wt% in the non-aqueous electrolyte solution.

3. The non-aqueous electrolyte solution of claim 1, wherein the compound represented by Formula 1 is included in an amount of 5 wt% to 30 wt% in the non-aqueous electrolyte solution.

4. The non-aqueous electrolyte solution of claim 1, wherein the halogen element is F.

5. The non-aqueous electrolyte solution of claim 1, wherein, in one or more substituents of $R_3$, $R_4$, $R_5$, and $R_6$, at least one hydrogen is substituted with the halogen element which is selected from the group consisting of F, Br, Cl and I.

6. The non-aqueous electrolyte solution of claim 1, wherein one or more substituents of $R_3$, $R_4$, $R_5$, and $R_6$ are each independently selected from a trifluoromethyl group and a trifluoromethoxy group.

7. The non-aqueous electrolyte solution of claim 1, wherein one or more substituents of $R_3$, $R_4$, $R_5$, and $R_6$ are a trifluoromethoxy group.

8. The non-aqueous electrolyte solution of claim 1, wherein the compound represented by Formula 1 comprises at least one selected from a compound represented by Formula 2 and a compound represented by Formula 3:

[Formula 2]

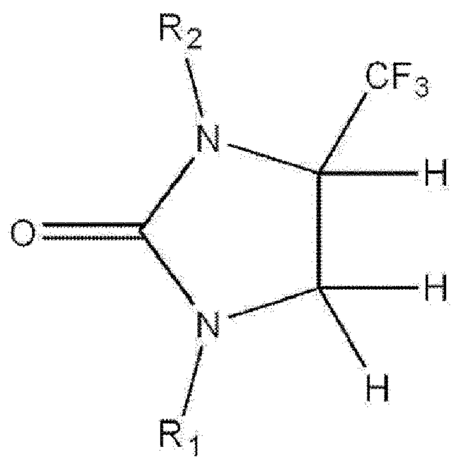

[Formula 3]

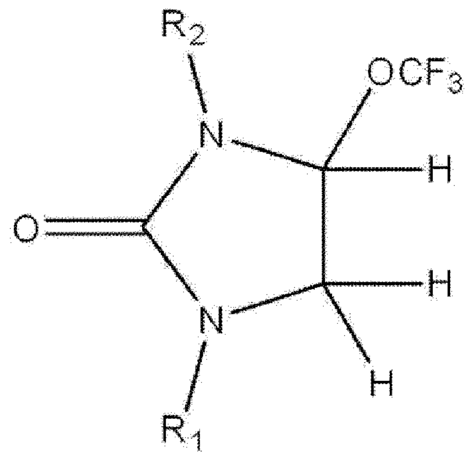

wherein, in Formulae 2 and 3, $R_1$ and $R_2$ are each independently a substituent selected from an alkyl group having 1 to 10 carbon atoms and an aryl group having 6 to 14 carbon atoms.

**9.** The non-aqueous electrolyte solution of claim 8, wherein, in Formulae 2 and 3, $R_1$ and $R_2$ are methyl groups.

**10.** The non-aqueous electrolyte solution of claim 1, wherein the lithium salt comprises $LiPF_6$.

**11.** The non-aqueous electrolyte solution of claim 1, wherein the organic solvent comprises at least one selected from a linear carbonate and a cyclic carbonate.

**12.** The non-aqueous electrolyte solution of claim 1, wherein the organic solvent comprises a linear carbonate.

**13.** The non-aqueous electrolyte solution of claim 1, further comprising at least one additive selected from the group consisting of vinylene carbonate, vinylethylene carbonate, propane sultone, succinonitrile, adiponitrile, ethylene sulfate, propene sultone, fluoroethylene carbonate, $LiPO_2F_2$, LiODFB (Lithium difluorooxalatoborate), LiBOB (Lithium bis-(oxalato)borate), TMSPa (3-trimethoxysilanyl-propyl-N-aniline), TMSPi (Tris(trimethylsilyl) Phosphite), and $LiBF_4$.

**14.** A lithium secondary battery comprising:

a negative electrode;
a positive electrode facing the negative electrode;
a separator disposed between the negative electrode and the positive electrode; and
the non-aqueous electrolyte solution of claim 1.

**15.** The lithium secondary battery of claim 14, wherein the positive electrode comprises a positive electrode collector, and a positive electrode active material layer disposed on at least one surface of the positive electrode collector, wherein the positive electrode active material layer comprises a positive electrode active material, and
the positive electrode active material, as a lithium transition metal composite oxide, comprises 60 mol% or more of nickel based on the total number of moles of transition metals included in the lithium transition metal composite oxide.

**INTERNATIONAL SEARCH REPORT**

International application No.
**PCT/KR2022/010350**

**A. CLASSIFICATION OF SUBJECT MATTER**

**H01M 10/0567**(2010.01)i; **H01M 10/052**(2010.01)i; **H01M 4/525**(2010.01)i

According to International Patent Classification (IPC) or to both national classification and IPC

**B. FIELDS SEARCHED**

Minimum documentation searched (classification system followed by classification symbols)

H01M 10/0567(2010.01); C25D 3/44(2006.01); H01M 10/40(2006.01); H01M 10/42(2006.01); H01M 4/02(2006.01); H01M 6/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 비수 전해액(non-aqueous electrolyte), 리튬염(lithium salt), 유기 용매(organic solvent), 트리플루오로메틸기(trifluoromethyl group), 트리플루오로메톡시기(trifluoromethoxyl group)

**C. DOCUMENTS CONSIDERED TO BE RELEVANT**

| Category* | Citation of document, with indication, where appropriate, of the relevant passages | Relevant to claim No. |
|---|---|---|
| X | JP 2002-270228 A (SONY CORP.) 20 September 2002 (2002-09-20)<br>See claim 1; and paragraphs [0003], [0010], [0013], [0014], [0050], [0051], [0056], [0060], [0061] and [0078]. | 1-5,10-12,14,15 |
| Y | | 13 |
| A | | 6-9 |
| Y | KR 10-2020-0126781 A (LG CHEM, LTD.) 09 November 2020 (2020-11-09)<br>See paragraphs [0062]-[0065], [0067] and [0068]. | 13 |
| A | JP 2004-014248 A (SONY CORP.) 15 January 2004 (2004-01-15)<br>See entire document. | 1-15 |
| A | US 4579796 A (MURAMATSU, H.) 01 April 1986 (1986-04-01)<br>See entire document. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2022** | **24 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/010350**

**C. DOCUMENTS CONSIDERED TO BE RELEVANT**

| Category* | Citation of document, with indication, where appropriate, of the relevant passages | Relevant to claim No. |
|---|---|---|
| A | WO 2015-030196 A1 (KYOTO UNIVERSITY) 05 March 2015 (2015-03-05) See entire document. | 1-15 |

Form PCT/ISA/210 (second sheet) (July 2022)

**INTERNATIONAL SEARCH REPORT**
**Information on patent family members**

International application No.
**PCT/KR2022/010350**

| Patent document cited in search report | Publication date (day/month/year) | Patent family member(s) | Publication date (day/month/year) |
|---|---|---|---|
| JP 2002-270228 A | 20 September 2002 | None | |
| KR 10-2020-0126781 A | 09 November 2020 | CN 113711414 A | 26 November 2021 |
| | | EP 3937286 A1 | 12 January 2022 |
| | | JP 2022-523945 A | 27 April 2022 |
| | | US 2022-0181691 A1 | 09 June 2022 |
| | | WO 2020-222469 A1 | 05 November 2020 |
| JP 2004-014248 A | 15 January 2004 | None | |
| US 4579796 A | 01 April 1986 | DE 3425396 A1 | 21 February 1985 |
| | | JP 60-017872 A | 29 January 1985 |
| WO 2015-030196 A1 | 05 March 2015 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210093499
- US 20180316061 A